(19) **Europäisches Patentamt / European Patent Office / Office européen des brevets**

(11) **EP 1 550 256 B1**

(12) # EUROPEAN PATENT SPECIFICATION

(45) Date of publication and mention
of the grant of the patent:
**23.01.2013 Bulletin 2013/04**

(51) Int Cl.:
*H04L 9/00* (2006.01)     *H04L 9/32* (2006.01)

(21) Application number: **03739087.9**

(22) Date of filing: **11.06.2003**

(86) International application number:
**PCT/US2003/018412**

(87) International publication number:
**WO 2004/023711 (18.03.2004 Gazette 2004/12)**

(54) **Method and system for efficiently retrieving secured data by securely pre-processing provided access information**

Verfahren und System zum effizienten Abrufen gesicherter Daten durch sicheres Vorverarbeiten von bereitgestellten Zugangsinformationen

Procédé et système permettant d'extraire efficacement des données securisées par pretraitement securisé des informations d'accés fournies

(84) Designated Contracting States:
**AT BE BG CH CY CZ DE DK EE ES FI FR GB GR HU IE IT LI LU MC NL PT RO SE SI SK TR**

(30) Priority: **06.09.2002 US 409282 P**

(43) Date of publication of application:
**06.07.2005 Bulletin 2005/27**

(73) Proprietor: **UNITED STATES POSTAL SERVICE Washington DC 20260-1135 (US)**

(72) Inventors:
• **WILSON, James, D.**
  **Collierville, TN 38017-1705 (US)**

• **SNAPP, Robert, F.**
  **Memphis, TN 38119-3709 (US)**
• **PAYNE, David, J.**
  **Collierville, TN 38017-3805 (US)**
• **GILLOCK, Edgar, H., II**
  **Memphis, TN 38122-3711 (US)**

(74) Representative: **Viering, Jentschura & Partner Grillparzerstrasse 14 81675 München (DE)**

(56) References cited:
**EP-A- 0 381 418     DE-C1- 4 421 640
US-A- 5 893 120     US-A- 5 933 604
US-A- 5 966 542     US-A1- 2002 049 670**

**Description**

**RELATED APPLICATIONS**

This application is a continuation-in-part of co-pending U.S. Patent Application US 2003/0182568 A1 entitled "METHOD AND SYSTEM FOR STORING AND RETRIEVING DATA USING HASH-ACCESSED MULTIPLE DATA STORES". This application is further related to pending U.S. Patent Applications: US 2004/0007616 A1 entitled "SYSTEM AND METHOD FOR STANDARDIZING A MAILING ADDRESS"; US 2003/0182018 A1 entitled "A METHOD FOR CORRECTING A MAILING ADDRESS"; and US 2004/0128274 A1 entitled "DELIVERY POINT VALIDATION SYSTEM".

**BACKGROUND OF THE INVENTION**

1. Field of the Invention

The present invention relates generally to secure database data retrieval, and more specifically, to a method and a computer system for efficiently retrieving data from a secured database by pre-processing provided access information. The present invention relates specifically to a method and a computer system for retrieving new mailing address information from a privatized mailing address database in response to permutations of name and old address inputs that are non-standardized.

2. Background of the Invention

Mailing address information privacy is protected by statutes such as 39 U.S.C. §412, that prevents the United States Postal Service (USPS) and others from providing a list of addresses and 5 U.S.C. §552(a) that prevents the revelation of private information for other than intended purposes. Consequently, the USPS must oversee authorized agents who are selected to possess sensitive data such as mailing address database information. Specifically, lists of mailing addresses must not be provided by the USPS or any agent, and when retrieving change-of-address information for a single party, name and address information for any other party must not be revealed.

The above mentioned U.S. Patent Application US 2003/0182568 A1 provides a secured data store that may contain address information and be distributed to vendors that are not agents supervised by the USPS. However, in order to use the method and system described in the above-referenced patent application, access information must be standardized and filtered (pre-processed) so that the information placed in the data store may be retrieved. While the above-referenced patent application describes a level of pre-processing that obtains an 11-digit delivery point code (DPC) that is used to access the data stores and retrieve associated address information, the DPC must be obtainable from user input or other data entry, such as records in other data stores, before the address information can be accessed.

However, stored data, user input and access information provide by other sources that correspond to the name of a business or an individual may not be uniform and may contain errors. For example, a user verifying the address for ABC, Inc. known as ABC Computers, where valid identifiers may be Albuquerque Computers, Inc., ABC Computers, ABQ Computers, ABC, Inc. and a number of other permutations that should provide access to the requested new mailing address information, when a valid old address is supplied in conjunction. Further, when verifying the address of an individual, valid variations in proper names may also yield many permutations that should provide access to the requested mailing address information.

In order to process permutations of access information, however, a typical software application would need to contain the required access information in order to match the permutations and to determine to which type of entity (business or individual) a particular input corresponds. Such embedding of the information in the above-described data store system would compromise the security provided by the system.

The German Patent DE 44 21 640 C1 describes a hash addressing and memory process for distribution and recovery of data using a data word that has a code section and additional data. The technical features known from that Patent can be gathered from the preamble of the independent claims.

The European Patent Application EP 0 381 418 A2 describes a small fast lookup table for use in a data processing system wherein the offset hashing function locates entries in a lookup table faster than previously known methods that were as space efficient, while requiring less space than previously known methods that were as fast.

The U.S. Patent US 5 893 120 A describes a method and apparatus for performing storage and retrieval in an information storage system that uses a hashing technique with an external chaining method for collision resolution.

Therefore, it would be desirable to provide a method and a computer system for retrieving information from a secured data store that securely pre-processes provided access information and provides efficient retrieval of address information in response to permutations of access information input.

## SUMMARY OF THE INVENTION

The above objective of efficiently retrieving information from a secured data store by securely pre-processing access information is accomplished in a method and system for retrieving data. The method may also be embodied in a computer program product and system containing computer-readable program instructions for carrying out the steps of the method on a general-purpose or workstation computer system.

The method for retrieving data receives input of access information such as an entity name and old mailing address. The access information is pre-processed by extracting a non-type-dependent portion of the access information and hashing the non-type-dependent portion to provide an access key to one or more look-up tables. Presence in the look-up tables verifies whether or not an entry exists that corresponds to the access information and permits categorization of the access information by type (e.g., business or individual). Once an entry is found, type-dependent portions of the access information are pre-processed to standardize the non-type dependent portions (e.g., standardizing a business name or individual's name) and the pre-processing may be performed according to the access information type. Again, look-up tables may be consulted to determine whether or not data is present in the data store corresponding to the access information. If data is present, requested secured data is retrieved from the secured data store using the security retrieval algorithm associated with the data store. If an entry is not found, the type-dependent portion of the access information can be permuted and access attempts can be reiteratively made until possible permutations are exhausted.

## BRIEF DESCRIPTION OF THE DRAWINGS

Figure 1 is a block diagram depicting a computer system in which the present invention may be practiced.

Figure 2 is a pictorial diagram depicting the flow of access information in accordance with an embodiment of the present invention.

Figure 3 is a flowchart depicting operation of the system executing a retrieval method in accordance with a generalized embodiment of the present invention.

Figure 4 is a flowchart depicting operation of the system executing a retrieval method in accordance with another specific embodiment of the present invention for retrieving change-of-address information.

## DETAILED DESCRIPTION OF THE EMBODIMENTS

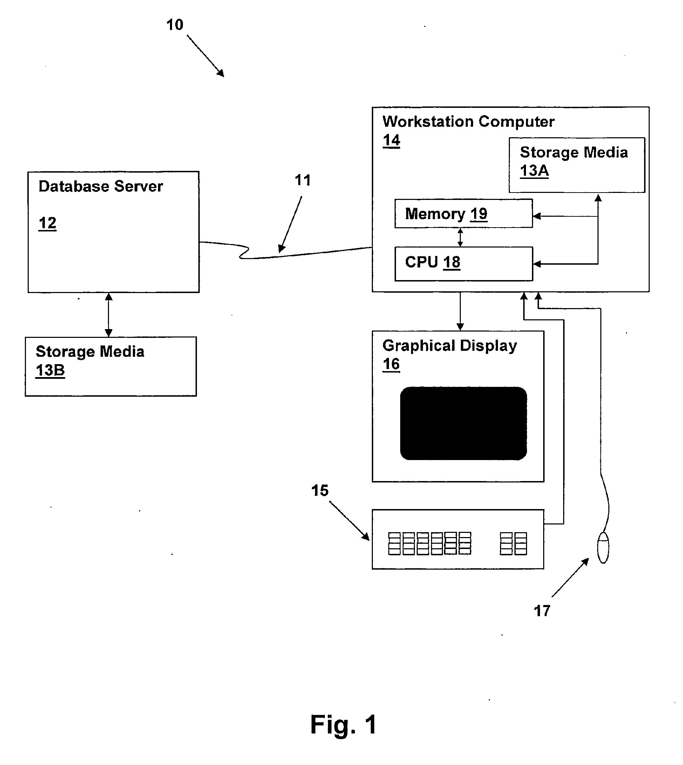

Referring now to the figures and in particular to Figure 1, there is depicted a computer system 10 within which a method may be performed via the execution of program instructions forming a computer program product and computer system in accordance with an embodiment of the present invention. The method may employ program instructions located within a memory 19 of a workstation computer 14 and executed by a central processing unit 18 (CPU) and the data store and look-up tables of the present invention may be located entirely within a storage media 13A and memory 19. Alternatively, workstation computer 14 may be coupled via a network 11 connection for coupling workstation computer 14 to a network such as a local-area network (LAN), wide-area network (WAN) or the Internet. In a network implementation, the data store and/or program instructions for implementing the methods of the present invention may be located within a database server 12 coupled to a storage media 13B.

The method of the present invention provides inherent database security, permitting distribution of a program, data store and look-up tables to an end-user for execution on workstation computer 14 or access to the data store/look-up tables and execution of the program via the Internet or other network. Other combinations such as local-hosted program with remote data store, local data store with remote-hosted program are possible and should be understood to be variations in accordance with embodiments of the present invention.

A specific embodiment or set of embodiments is described herein for application to securing change-of-address information for business names and addresses and individual names and addresses. The use of the term "individual" should be understood to refer to family names as well, as a change-of-address can be entered for a family or an individual. The system and method provide a new address, given an old address and entity (individual/family or business) name as input. In the case of either business or individual/family names, the data store may also contain footnote indicators that verify that a move has taken place, but no change-of-address data is available. Such output may also be provided if conflicting information is found in the data store. The system may indicate that a known move has occurred, but that a new address is unavailable as a valid output.

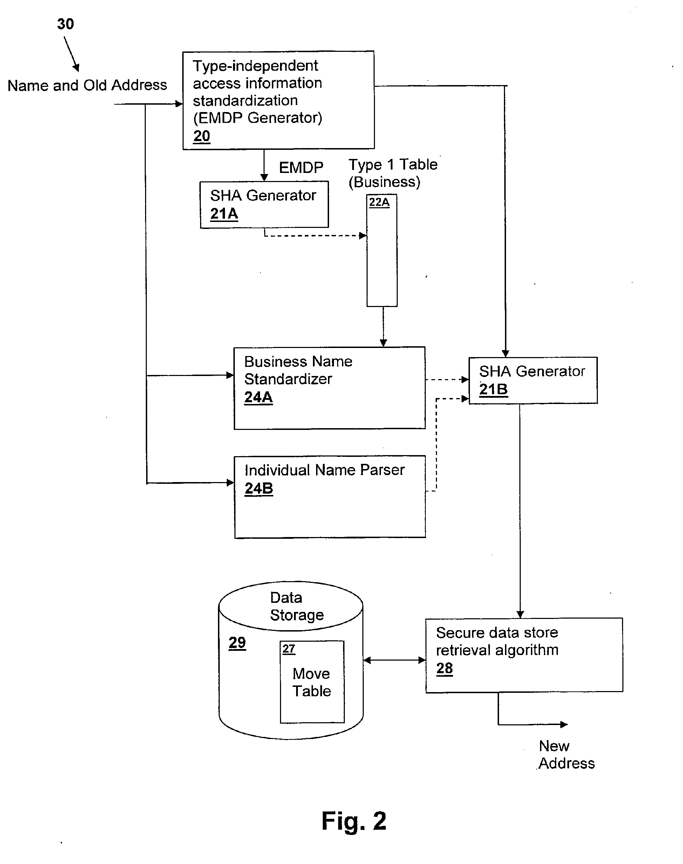

Referring now to Figure 2, a flow of information between computer program modules accordance with an embodiment of the present invention is shown. Access information 30, (for example, an old mailing address and entity name) is provided to a type-independent access information standardization module 20, which may be an enhanced modified delivery point (EDMP) generator in accordance with the techniques described in the above-incorporated U.S. Patent Application "SYSTEM AND METHOD FOR STANDARDIZING A MAILING ADDRESS", which produces a single numeric representation of a mailing address (an EDMP) given one of many permutations or expressions of a mailing address. The details of the techniques can be determined from the above-referenced Patent Application, but, in general, a postal code such as a ZIP Code or ZIP+4 Code extracted from the mailing address is concatenated with numeric fields (e.g., street number and unit number) extracted from the mailing address to provide a standardized address that is not dependent on spelling, street type (e.g., road, place, boulevard, street, etc.) or other variant (e.g., suite, apartment, apt., etc.).

Once a standardized version of the type-independent portion of the access information has been produced by standardization module **20**, the standardized information (e.g., an EDMP) is hashed using a Secure Hash Algorithm (SHA) by SHA generator **21A**.

The algorithm used by SHA generator **21A** may be a SHA-1 algorithm, or may be another hashing algorithm that provides sufficient security.

Details of SHA-1 algorithms are described in the "SECURE HASH STANDARD", Federal Information Processing Standards Publication 180-1 issued by the National Institute of Standards and Technology (NIST), an agency of the U.S. government. The SHA-1 algorithm is typically used for producing a condensed version of a message for verification through a Digital Signature Algorithm (DSA). The condensed version of the message (the message digest) encoded in a digital signature can be compared to a message digest generated from a received for verification that the received message content is the same as the transmitted message content. The message digest is a 20-byte number that is typically used for signature/message verification, but will be used herein in a new manner to provide access to the look-up tables and data stores of the present invention.

The present invention uses the SHA-1 algorithm to produce a representation of the access information or portions thereof for access to look-up tables and access to data stores and not for the above-described original purpose of the SHA-1 algorithm. It should be understood that other algorithms may be used to produce the hashed representation of the access information as used in the present invention and that use of the SHA-1 algorithm is a convenience and not a limitation of the present invention.

Once the hashed version of the type-independent portion of the access information is obtained, one or more look-up tables **22A** are consulted to determine whether or not an entry exists for the access information according to the entry type associated with the look-up tables **22A**. In the illustrated embodiment, look-up tables **22A** comprises a single table that indicates whether or not there is an entry for a business at the EDMP produced by standardization generator **20**. Since the change-of-address system described as an embodiment of the invention herein manages two information types (i.e., business entries and individual entries), only one look-up table **22A** is required, as absence of an entry in look-up table **22A** is used as a presumption that the EDMP is associated with an individual. However, other embodiments of the invention may manage more than two information types, and therefore multiple look-up tables may be used to consecutively filter the information in order to determine a valid entry type.

Look-up table **22A** may be implemented as a bit array as described in the above-incorporated U.S. Patent Application entitled "DELIVERY POINT VALIDATION SYSTEM", which describes the use of a bit array for verification of the presence of an address entry in the look-up table that has very low computational overhead on retrieval of the information. Address indicia that changes, e.g., street renaming, unit re-numbering, etc. are updated in the look-up table as described in the above-incorporated patent application "METHOD FOR CORRECTING A MAILING ADDRESS". The delivery point validation technique provides the hashed EMDP to an extraction algorithm that selects samples from the hashed EMDP (or other access information in applications other than a change-of-address system) that are used as offsets into the bit array. If a bit is set within the bit array, the presence of the individual sample is verified. If all samples are indicated as present, then the existence of an entry in look-up tables is verified. The above-referenced patent application provides further details of bit array implementation for verifying the validity of an EMDP or other data type.

If the EMDP is verified as a valid business address, a business name standardizer **24A** standardizes the name provided as input (the type-dependent portion of access information). The business name standarizer **24A** uses the ZIP Code to access a business name table that contains a list of correct business names as entered on the actual change-of-address card, Internet change-of-address system or other mechanism used to enter changes of address.

Once the business name has been standardized, the business name is provided to SHA generator **21B** and combined with the EMDP and a SHA-1 result is generated. SHA generator **21B** may use the same set of program instructions that provide SHA generator **21A** or may be another algorithm that provides security to access a move table **27**. Secure data store retrieval algorithm **28** provides access to move table **27**, which is stored in data storage device **29** as a file. Exemplary more table **27** comprises multiple data stores as described in the above-incorporated parent application "METHOD AND SYSTEM FOR STORING AND RETRIEVING DATA USING HASH-ACCESSED MULTIPLE DATA STORES", which yields a new mailing address (or other information for other applications of the system) in response to access information that has been processed into a hashed result. The data store comprising all of the multiple data stores described in the above-referenced patent is very secure against data mining and prevents revelation of private data, unless all of the required access information (e.g., name and old mailing address) are known.

The above-referenced patent application describes the storing and retrieving of standardized address information and may be extended to other types of information, depending on the type of information retrieval required for the particular embodiment of the present invention. In particular, a mathematical representation of a new (moved-to) address is used with a change-of-address system in accordance with an embodiment of the present invention. The data that is placed in the data stores is 7-byte information that comprises a number computed from: a five digit ZIP Code Z[64000], a four-digit add-on with a two-digit delivery point selector ZP[1000000], a gender flag G[3], the first M1[27] and second M2[27] characters of the middle initial, the move effective date D[120], an address drop flag A[2] and a flag to indicate the use of a middle name MU[2]. The numbers in brackets following each of the above elements depicts the number of values or states that each of the above-listed elements can assume.

The mathematical expression of the stored address information is computed as a representation that essentially assigns a "digit" of a base equal to the number of states (or a greater arbitrary number) assumable by each of the above elements, and therefore is a sum of each of the elements multiplied by the next lower digit's base and the base of the digit itself. The expression for the stored data (which, once retrieved, is used to compute the elements of the address by modulo arithmetic to extract each "digit" knowing the base). The formula for the data stored in each element of data stores in the secured database is:

```
Data = ZP + 1,000,000 * (Z + (64,000 *(G + M2*3 + M1*81 +

D*2187 + A*262440 + MU*524880))
```

which can be equivalently expressed as described above, but for clarity of the relationship of the ZIP and ZIP+4 values to the stored/retrieved data, is expressed with the additional information grouped separately. The factors can be multiplied through to determine the base values of the individual digits. Upon extraction of a data element from the data store, the element is divided by the base values to yield modulo results giving the components of the new address. The above number will not exceed $254^7$, which is the maximum data size for the seven data store implementation of the storage and retrieval method disclosed in the above-referenced patent application. The data portions are retrieved, de-striped and combined after modulo-254 processing, then the new address is generated by performing the above variable-modulo computation to yield the individual new address elements.

As an alternative to the use of the multiple data store security techniques described in the above-referenced patent application, the look-up table techniques for improving the operating efficiency of the method of the present invention may be applied to other data security methods and algorithms in addition to the secure data store method of the above-referenced patent application. For example, an encrypted data store (as opposed to a hash-coded data store access) requires a large amount of computational overhead for retrieving data due to the decryption process. Look-up tables may be employed in front of such data stores to avoid searching an encrypted data store for invalid entries.

If the name provided in the description above does not correspond to a business name, then an Individual Name Parser 24B parses out the individual components of the name (e.g., first, middle and last) and also attempts to find a gender commonly associated with the name. The parsed name is supplied to SHA generator 21B, and is combined with the EMDP as in the case for the business name and move table 27 is checked for the presence of a change-of-address entry. If no entry is found, permutations of the name can be generated by Individual Name Parser 24B using common misspellings of the last name. Subsequent attempts can permute the name using known nicknames (from a nickname table) and common misspelling of the first name. Other tables may be used to provide sound-alike (via phonetic soundex representation) permutations with fuzzy logic exceptions to the sound-alike variations. For example, Baker and Becker may have the same soundex but are not considered equivalent. After the above-described variants have been attempted, a query is made using just the last name and address. An entry in move table 27 for a last name/address combination indicates a "family" move, where no one is left in a household having the same last name after a move.

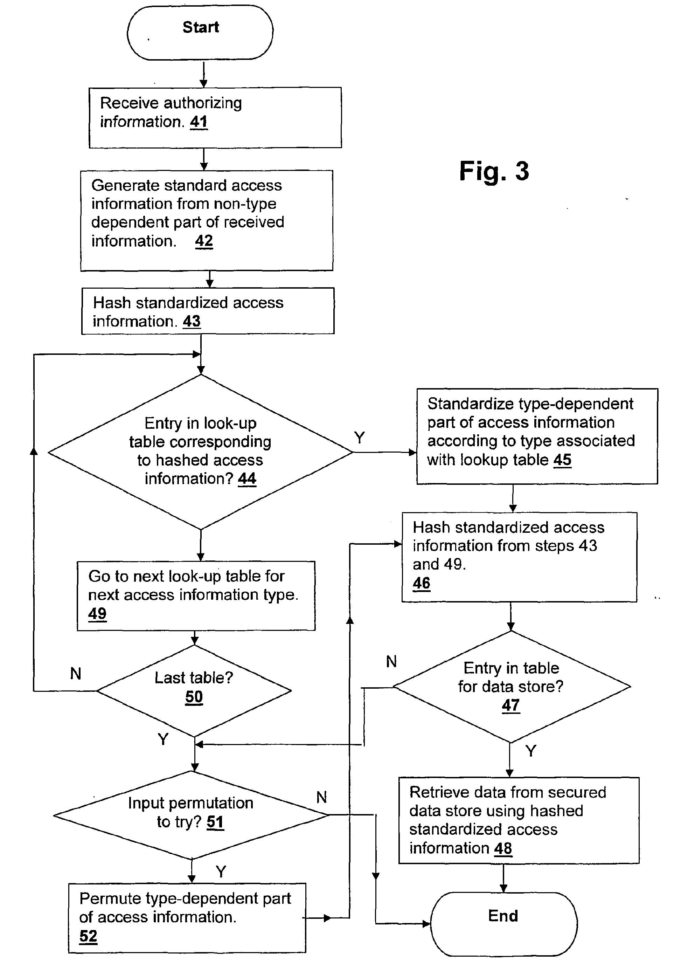

Referring now to **Figure 3,** a secure data retrieval method in accordance with a generic embodiment of the present invention is depicted. First, authorizing information is received (**step 41**) and standard access information is generated from a non-type dependent portion of the received access information (**step 42**). The standardized access information is hashed (**step 43**) and one or more look-up tables are consulted to determine if an entry exists for the hashed access information (**decision 44**). If an entry is found, the type-dependent portion of the access information is standardized according to the type corresponding to the look-up table in which the entry was found (**step 45).** The combined standardized access information from **steps 43** and **49** is then hashed (**step 46**) and the presence of an entry is verified in the secure data store (**decision 47**). If there is an entry in the secure data store corresponding to the combined standardized access information (**decision 47**), the requested data is retrieved from the secure data store using the hashed combined standardized access information (**step 48**). If no entry was found in **decision 47,** if input permutations are to be tried and all permutations are not exhausted (**decision 51**), then the type-dependent portion of the access information is permuted (**step 52**) and another combined access information hashed result is computed according to **step 46** and the steps of verifying (**step 47**) and retrieving (**step 48**) are repeated for the permutation(s).

If in **decision 44**, an entry is not found in the first look-up table, additional look-up tables may be consulted for other access information types (**step 49**) until the last table is reached (**decision 50**). The input from **step 41** can be permuted according to **step 51** if no entry is found in any table in **step 44.**

The method of **Figure 3** may be applied to any system that requires output of "revealed data" in response to the receipt of "authorizing data". For example, the following table depicts authorizing/revealed data pairs to which the method may be applied according to **Table I** below.

**Table I**

| Authorizing Data | Revealed Data |
|---|---|
| Vehicle Identification Number | Key Number |
| Full Name and Address | Unpublished Telephone Number |
| Full Name and Address | Credit Card Number |
| Computer Serial Number | Password |
| Full Name and Address | Weapon Registration Number |
| Patient ID Number | Medical Information |
| Last Name and Telephone Number | Limited Guest Invitation number |
| Biometric data (eye scan, palm print, DNA, thumbprint, etc.) | Name |
| Name and registration number | Email Address |

**Table I** is illustrative of private data that must be secured, and is not limiting, but exemplary of various applications for both government entities, businesses and private organizations.

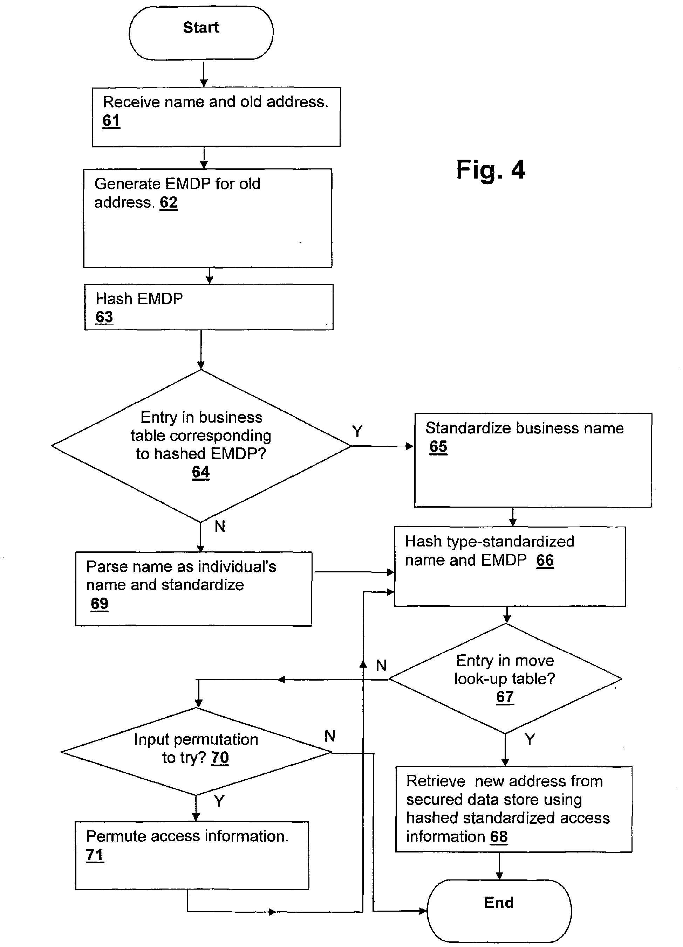

Referring now to **Figure 4**, a method in accordance with a specific embodiment of the invention as applied to a change-of-mailing address system is depicted. The name and old address of a business or individual is received (**step 61**) and an EMDP is generated for the old address (**step 62**). The EMDP is hashed (**step 63**) and the business change-of-address look-up table is consulted. If an entry is found in the business change-of-address look-up table (**step 64**), then the business name is standardized (**step 65**) using the business name table and hashed along with the EMDP (**step 66**). The move table is consulted to determine if an entry exists (**decision 67**) and if the entry exists, the new address is retrieved from the secured data store using the hashed standardized access information (**step 68**). If an entry is not found in the move table, further permutation of the input if available (**decision 70**), may be attempted (**step 71**) and the name and EMDP hashed (step 66) and the move table re-checked (**decision 67**) for an entry.

If a business entry was not found in **decision 64,** then the name and old address received in **step 61** are presumed to be that of an individual and the name is parsed and standardized **69**. The standardized name and EMDP are hashed (**step 66**) and the move table consulted (**decision 67**) to determine if an entry is present. If an entry is present, the individual's new address is extracted from the secured data store using the combined hashed result of **step 68**.

While the invention has been particularly shown and described with reference to the preferred embodiments thereof, it will be understood by those skilled in the art that the foregoing and other changes in form, and details may be made therein without departing from the scope of the invention.

**Claims**

1. A method for retrieving secured data from a secure data store, comprising:

   receiving (41) access information;
   hashing (43) a type-independent portion of said received access information to produce a hashed result;
   determining (44) whether or not said hashed result is present in a look-up table (22A); and
   in response to determining that said hashed result is present in said look-up table (22A), retrieving (48) said secured data from said secured data store using a secure retrieval algorithm associated with said secured data store;

the method being **characterized by**:

in response to determining that said hashed result is not present in said look-up table (22A), permuting (52) said access information to obtain permuted access information;
wherein said steps of hashing, determining and
retrieving are performed in conformity with said permuted access information.

2. The method of Claim 1, wherein said retrieving comprises:

standardizing (45) a type-dependent portion of said received access information;
combining said standardized type-dependent portion of said received access information with said type-independent portion of said received access information;
hashing (46) a result of said combining to obtain a combined hashed result; and
accessing said secure data store with said combined hashed result.

3. The method of Claim 2, wherein said accessing comprises:

splitting said combined hashed result into a plurality of offset fields, a quantity of said plurality of fields corresponding to a number of separate data stores in which portions of said secured data are stored;
accessing locations in said separate data stores using said offset fields as indices into said data stores, whereby portions of said secured data are retrieved from said locations; and
combining said portions of said secure data to produce said secured data.

4. The method of Claim 3, wherein said combining combines said data value portions by multiplying said data value portions by powers of a predetermined numeric base corresponding to a position of each data value portion in said data value.

5. The method of Claim 3, wherein said combining comprises:

dividing a field of said hashed result by a predetermined striping combination number to produce a striping modulus;
selecting a striping order from a striping order table in conformity with said modulus; and
reordering said portions of said secured data according to said retrieved striping order,
whereby said combining is performed in conformity with said striping order.

6. The method of Claim 1, wherein said hashing is performed according to a SHA-1 algorithm.

7. The method of Claim 1, wherein said look-up table (22A) is associated with a first type of said access information, and wherein said method further comprises in response to determining that said hashed result is not present in said look-up table (22A), determining whether or not said hashed result is present in a second look-up table (22A) corresponding to a second type of said access information.

8. The method of Claim 1, wherein said type-independent portion of said access information is an old mailing address of an entity, wherein said type-dependent portion of said access information is a name of an entity and wherein said secured data is a new mailing address of said entity.

9. The method of Claim 8, wherein said look-up table (22A) contains entries corresponding to business entities, and wherein said method further comprises in response to determining that said hashed result is not present in said look-up table (22A), treating the access information as a name and old address of one or more individual persons.

10. A computer system (14) comprising a processor (18) for executing program instructions and a memory (19) coupled to said processor (18) for storing program instructions and data, wherein said program instructions comprise program instructions for:

receiving access information,
hashing a type-independent portion of said received access information to produce a hashed result,
determining whether or not said hashed result is present in a look-up table (22A), and
in response to determining that said hashed result is present in said look-up table (22A), retrieving said secured data from said secured data store using a secure retrieval algorithm associated with said secured data store; said program instructions being **characterized by**:

further comprising program instructions for in response to determining that said hashed result is not present in said look-up table (22A), permuting said access information to obtain permuted access information, wherein said program instructions for hashing,
determining and retrieving are executed again using said permuted access information as input.

11. The computer system (14) of Claim 10, wherein said program instructions for retrieving comprise program instructions for:

standardizing a type-dependent portion of said received access information,
combining said standardized type-dependent portion of said received access information with said type-independent portion of said received access information,
hashing a result of said combining to obtain a combined hashed result, and
accessing said secure data store with said combined hashed result.

12. The computer system (14) of Claim 11, wherein said program instructions for accessing comprise program instructions for:

splitting said combined hashed result into a plurality of offset fields, a quantity of said plurality of fields corresponding to a number of separate data stores in which portions of said secured data are stored,
accessing locations in said separate data stores using said offset fields as indices into said data stores, whereby portions of said secured data are retrieved from said locations, and
combining said portions of said secure data to produce said secured data.

13. The computer system (14) of Claim 12, wherein said program instructions for combining combine said data value portions by multiplying said data value portions by powers of a predetermined numeric base corresponding to a position of each data value portion in said data value.

14. The computer system (14) of Claim 12, wherein said program instructions for combining comprise program instructions for:

dividing a field of said hashed result by a predetermined striping combination number to produce a striping modulus,
selecting a striping order from a striping order table in conformity with said modulus, and
reordering said portions of said secured data according to said retrieved striping order,
whereby said combining is performed in conformity with said striping order.

15. The computer system (14) of Claim 10, wherein said program instructions for hashing implement a SHA-1 algorithm.

16. The computer system (14) of Claim 10, wherein said look-up table (22A) is associated with a first type of said access information, and wherein said program instructions further comprise program instructions for in response to determining that said hashed result is not present in said look-up table (22A), determining whether or not said hashed result is present in a second look-up table (22A) corresponding to a second type of said access information.

17. The computer system (14) of Claim 10, wherein said type-independent portion of said access information is an old mailing address of an entity, wherein said type-dependent portion of said access information is a name of an entity and wherein said secured data is a new mailing address of said entity.

18. The computer system (14) of Claim 17, wherein said look-up table (22A) contains entries corresponding to business entities, and wherein said program instructions further comprise program instructions for in response to determining that said hashed result is not present in said look-up table (22A), processing the access information as a name and old address of one or more individual persons.

19. A computer program product comprising a signal-bearing media encoding program instructions for execution within a general-purpose computer system (14), wherein said program instructions comprise program instructions for:

receiving access information,
hashing a type-independent portion of said received access information to produce a hashed result,
determining whether or not said hashed result is present in a look-up table (22A), and
in response to determining that said hashed result is present in said look-up table (22A), retrieving said secured data from said secured data store using a secure retrieval algorithm associated with said secured data store, said program instructions being **characterized by** program instructions for:

in response to determining that said hashed result is not present in said look-up table, permuting said access information to obtain permuted access information,
wherein said program instructions for hashing,
determining and retrieving are executed again using said permuted access information as input.

20. The computer program product of Claim 19, wherein said program instructions for retrieving comprise program instructions for:

standardizing a type-dependent portion of said received access information,
combining said standardized type-dependent portion of said received access information with said type-independent portion of said received access information,
hashing a result of said combining to obtain a combined hashed result, and
accessing said secure data store with said combined hashed result.

21. The computer program product of Claim 20, wherein said program instructions for accessing comprise program instructions for:

splitting said combined hashed result into a plurality of offset fields, a quantity of said plurality of fields corresponding to a number of separate data stores in which portions of said secured data are stored,
accessing locations in said separate data stores using said offset fields as indices into said data stores,
whereby portions of said secured data are retrieved from said locations, and
combining said portions of said secure data to produce said secured data.

22. The computer program product of Claim 21, wherein said program instructions for combining combine said data value portions by multiplying said data value portions by powers of a predetermined numeric base corresponding to a position of each data value portion in said data value.

23. The computer program product of Claim 21, wherein said program instructions for combining comprise program instructions for:

dividing a field of said hashed result by a predetermined striping combination number to produce a striping modulus,
selecting a striping order from a striping order table in conformity with said modulus, and
reordering said portions of said secured data according to said retrieved striping order,
whereby said combining is performed in conformity with said striping order.

24. The computer program product of Claim 19, wherein said program instructions for hashing implement a SHA-1 algorithm.

25. The computer program product of Claim 19, wherein said look-up table (22A) is associated with a first type of said access information, and wherein said program instructions further comprise program instructions for in response to determining that said hashed result is not present in said look-up table (22A), determining whether or not said hashed result is present in a second look-up table (22A) corresponding to a second type of said access information.

26. The computer program product of Claim 19, wherein said type-independent portion of said access information is an old mailing address of an entity, wherein said type-dependent portion of said access information is a name of an entity and wherein said secured data is a new mailing address of said entity.

27. The computer program product of Claim 26, wherein said look-up table (22A) contains entries corresponding to business entities, and wherein said program instructions further comprise program instructions for in response to determining that said hashed result is not present in said look-up table (22A), processing the access information as a name and old address of one or more individual persons.

**Patentansprüche**

1.  Verfahren zum Abrufen gesicherter Daten von einem sicheren Datenspeicher, aufweisend:

    Empfangen (41) von Zugangsinformation;
    Hashen (43) eines Typ-unabhängigen Teils der empfangenen Zugangsinformation, um ein gehashtes Ergebnis zu erzeugen;
    Ermitteln (44), ob das gehashte Ergebnis in einer Nachschlagtabelle (22A) vorhanden ist oder nicht; und
    in Antwort auf das Ermitteln, dass das gehashte Ergebnis in der Nachschlagtabelle (22A) vorhanden ist, Abrufen (48) der gesicherten Daten von dem sicheren Datenspeicher unter Verwendung eines mit dem sicheren Datenspeicher verknüpften sicheren Abruf-Algorithmus;
    wobei das Verfahren **gekennzeichnet ist durch**:

    in Antwort auf das Ermitteln, dass das gehashte Ergebnis in der Nachschlagtabelle (22A) nicht vorhanden ist, Permutieren (52) der Zugangsinformation zum Erhalten einer permutierten Zugangsinformation;
    wobei die Schritte des Hashens, Ermittelns und Abrufens in Übereinstimmung mit der permutierten Zugangsinformation durchgeführt werden.

2.  Verfahren gemäß Anspruch 1, wobei das Abrufen aufweist:

    Standardisieren (45) eines Typ-abhängigen Teils der empfangenen Zugangsinformation;
    Kombinieren des standardisierten Typ-abhängigen Teils der empfangenen Zugangsinformation mit dem Typ-unabhängigen Teil der empfangenen Zugangsinformation;
    Hashen (46) eines Ergebnisses des Kombinierens, um ein kombiniertes gehashtes Ergebnis zu erhalten; und
    Zugreifen auf den sicheren Datenspeicher mit dem kombinierten gehashten Ergebnis.

3.  Verfahren gemäß Anspruch 2, wobei das Zugreifen aufweist:

    Trennen des kombinierten gehashten Ergebnisses in eine Mehrzahl an Versatzfeldern, wobei eine Menge der Mehrzahl an Feldern einer Anzahl an separaten Datenspeicher, in denen Teile der gesicherten Daten gespeichert sind, entspricht;
    Zugreifen auf Stellen in den separaten Datenspeichern unter Verwendung der Versatzfelder als Indizes in den Datenspeichern, wodurch Teile der gesicherten Daten von den Stellen abgerufen werden; und
    Kombinieren der Teile der sicheren Daten, um die gesicherten Daten zu erzeugen.

4.  Verfahren gemäß Anspruch 3, wobei das Kombinieren die Datenwert-Teile mittels Multiplizierens der Datenwert-Teile mit Potenzen einer vorbestimmten numerischen Basis entsprechend einer Position eines jeden Datenwert-Teils in dem Datenwert kombiniert.

5.  Verfahren gemäß Anspruch 3, wobei das Kombinieren aufweist:

    Teilen eines Feldes des gehashten Ergebnisses durch eine vorbestimmte abstreifende Kombinationszahl, um einen abstreifenden Teilungsrest zu erzeugen;
    Auswählen einer abstreifenden Ordnung aus einer abstreifenden Ordnungstabelle in Übereinstimmung mit dem Teilungsrest; und
    Aufzeichnen der Teile der gesicherten Daten gemäß der erhaltenen abstreifenden Ordnung,
    wobei das Kombinieren in Übereinstimmung mit der abstreifenden Ordnung durchgeführt wird.

6.  Verfahren gemäß Anspruch 1, wobei das Hashen gemäß einem SHA-1-Algorithmus durchgeführt wird.

7.  Verfahren gemäß Anspruch 1, wobei die Nachschlagtabelle (22A) mit einem ersten Typ der Zugangsinformation verknüpft ist und wobei das Verfahren außerdem aufweist, in Antwort auf das Ermitteln, dass das gehashte Ergebnis in der Nachschlagtabelle (22A) nicht vorhanden ist, Ermitteln, ob das gehashte Ergebnis in einer zweiten Nachschlagtabelle (22A) entsprechend einem zweiten Typ an Zugangsinformation vorhanden ist oder nicht.

**8.** Verfahren gemäß Anspruch 1, wobei der Typ-unabhängige Teil der Zugangsinformation eine alte Zustelladresse einer Entität ist, wobei der Typ-abhängige Teil der Zugangsinformation ein Name einer Entität ist und wobei die gesicherten Daten eine neue Zustelladresse der Entität sind.

**9.** Verfahren gemäß Anspruch 8, wobei die Nachschlagtabelle (22A) Einträge entsprechend Geschäftsunternehmen enthält und wobei das Verfahren außerdem aufweist, in Antwort auf das Ermitteln, dass das gehashte Ergebnis in der Nachschlagtabelle (22A) nicht vorhanden ist, Behandeln der Zugangsinformation als einen Namen und eine alte Adresse einer oder mehrerer individueller Personen.

**10.** Computer-System (14) aufweisend einen Prozessor (18) zum Ausführen von Programm-Befehlen und einen mit dem Prozessor (18) gekoppelten Speicher (19) zum Speichern von Programm-Befehlen und Daten, wobei die Programm-Befehle aufweisen Programm-Befehle zum:

Empfangen von Zugangsinformation;
Hashen eines Typ-unabhängigen Teils der empfangenen Zugangsinformation, um ein gehashtes Ergebnis zu erzeugen;
Ermitteln, ob das gehashte Ergebnis in einer Nachschlagtabelle (22A) vorhanden ist oder nicht; und
in Antwort auf das Ermitteln, dass das gehashte Ergebnis in der Nachschlagtabelle (22A) vorhanden ist, Abrufen der gesicherten Daten von dem sicheren Datenspeicher unter Verwendung eines mit dem sicheren Datenspeicher verknüpften sicheren Abruf-Algorithmus;
wobei die Programm-Befehle **gekennzeichnet sind durch**:

außerdem Aufweisen von Programm-Befehlen zum in Antwort auf das Ermitteln, dass das gehashte Ergebnis in der Nachschlagtabelle (22A) nicht vorhanden ist,
Permutieren der Zugangsinformation zum Erhalten einer permutierten Zugangsinformation;
wobei die Programm-Befehle zum Hashen, Ermitteln und
Abrufen unter Verwendung der permutierten Zugangsinformation als Eingabe nochmals ausgeführt werden.

**11.** Computer-System (14) gemäß Anspruch 10, wobei die Programm-Befehle zum Abrufen aufweisen Programm-Befehle zum:

Standardisieren eines Typ-abhängigen Teils der empfangenen Zugangsinformation;
Kombinieren des standardisierten Typ-abhängigen Teils der empfangenen Zugangsinformation mit dem Typ-unabhängigen Teil der empfangenen Zugangsinformation;
Hashen eines Ergebnisses des Kombinierens, um ein kombiniertes gehashtes Ergebnis zu erhalten; und
Zugreifen auf den sicheren Datenspeicher mit dem kombinierten gehashten Ergebnis.

**12.** Computer-System (14) gemäß Anspruch 11, wobei die Programm-Befehle zum Zugreifen aufweisen Programm-Befehle zum:

Trennen des kombinierten gehashten Ergebnisses in eine Mehrzahl an Versatzfeldern, wobei eine Menge der Mehrzahl an Feldern einer Anzahl an separaten Datenspeichern, in denen Teile der gesicherten Daten gespeichert sind, entspricht;
Zugreifen auf Stellen in den separaten Datenspeichern unter Verwendung der Versatzfelder als Indizes in den Datenspeichern, wodurch Teile der gesicherten Daten von den Stellen abgerufen werden; und
Kombinieren der Teile der sicheren Daten, um die gesicherten Daten zu erzeugen.

**13.** Computer-System (14) gemäß Anspruch 12, wobei die Program-Befehle zum Kombinieren die Datenwert-Teile mittels Multiplizierens der Datenwert-Teile mit Potenzen einer vorbestimmten numerischen Basis entsprechend einer Position eines jeden Datenwert-Teils in dem Datenwert kombinieren.

**14.** Computer-System (14) gemäß Anspruch 12, wobei die Programm-Befehle zum Kombinieren aufweisen Programm-Befehle zum:

Teilen eines Feldes des gehashten Ergebnisses durch eine vorbestimmte abstreifende Kombinationszahl, um einen abstreifenden Teilungsrest zu erzeugen;
Auswählen einer abstreifenden Ordnung aus einer abstreifenden Ordnungstabelle in Übereinstimmung mit dem Teilungsrest; und

Aufzeichnen der Teile der gesicherten Daten gemäß der erhaltenen abstreifenden Ordnung, wobei das Kombinieren in Übereinstimmung mit der abstreifenden Ordnung durchgeführt wird.

**15.** Computer-System (14) gemäß Anspruch 10, wobei die Programm-Befehle zum Hashen einen SHA-1-Algorithmus implementieren.

**16.** Computer-System (14) gemäß Anspruch 10, wobei die Nachschlagtabelle (22A) mit einem ersten Typ der Zugangsinformation verknüpft ist und wobei die Programm-Befehle außerdem aufweisen Programm-Befehle zum, in Antwort auf das Ermitteln, dass das gehashte Ergebnis in der Nachschlagtabelle (22A) nicht vorhanden ist, Ermitteln, ob das gehashte Ergebnis in einer zweiten Nachschlagtabelle (22A) entsprechend einem zweiten Typ an Zugangsinformation vorhanden ist oder nicht.

**17.** Computer-System (14) gemäß Anspruch 10, wobei der Typ-unabhängige Teil der Zugangsinformation eine alte Zustelladresse einer Entität ist, wobei der Typ-abhängige Teil der Zugangsinformation ein Name einer Entität ist und wobei die gesicherten Daten eine neue Zustelladresse der Entität sind.

**18.** Computer-System (14) gemäß Anspruch 17, wobei die Nachschlagtabelle (22A) Einträge entsprechend Geschäftsunternehmen enthält und wobei die Programm-Befehle außerdem aufweisen Programm-Befehle zum, in Antwort auf das Ermitteln, dass das gehashte Ergebnis in der Nachschlagtabelle (22A) nicht vorhanden ist, Behandeln der Zugangsinformation als einen Namen und eine alte Adresse einer oder mehrerer individueller Personen.

**19.** Computer-Programm-Produkt aufweisend ein Signaltragendes Medium, welches Programm-Befehle zum Ausführen innerhalb eines Mehrzweck-Computer-Systems (14) kodiert hat, wobei die Programm-Befehle aufweisen Programm-Befehle zum:

Empfangen von Zugangsinformation;
Hashen eines Typ-unabhängigen Teils der empfangenen Zugangsinformation, um ein gehashtes Ergebnis zu erzeugen;
Ermitteln, ob das gehashte Ergebnis in einer Nachschlagtabelle (22A) vorhanden ist oder nicht; und
in Antwort auf das Ermitteln, dass das gehashte Ergebnis in der Nachschlagtabelle (22A) vorhanden ist,
Abrufen der gesicherten Daten von dem sicheren Datenspeicher unter Verwendung eines mit dem sicheren Datenspeicher verknüpften sicheren Abruf-Algorithmus;
wobei die Programm-Befehle **gekennzeichnet sind durch**:

außerdem Aufweisen von Programm-Befehlen zum in Antwort auf das Ermitteln, dass das gehashte Ergebnis in der Nachschlagtabelle nicht vorhanden ist, Permutieren der Zugangsinformation zum Erhalten einer permutierten zugangsinformation;
wobei die Programm-Befehle zum Hashen, Ermitteln und
Abrufen unter Verwendung der permutierten Zugangsinformation als Eingabe nochmals ausgeführt werden.

**20.** Computer-Programm-Produkt gemäß Anspruch 19, wobei die Programm-Befehle zum Abrufen aufweisen Programm-Befehle zum:

Standardisieren eines Typ-abhängigen Teils der empfangenen Zugangsinformation;
Kombinieren des standardisierten Typ-abhängigen Teils der empfangenen Zugangsinformation mit dem Typ-unabhängigen Teil der empfangenen Zugangsinformation;
Hashen eines Ergebnisses des Kombinierens, um ein kombiniertes gehashtes Ergebnis zu erhalten; und
Zugreifen auf den sicheren Datenspeicher mit dem kombinierten gehashten Ergebnis.

**21.** Computer-Programm-Produkt gemäß Anspruch 20, wobei die Programm-Befehle zum Zugreifen aufweisen Programm-Befehle zum:

Trennen des kombinierten gehashten Ergebnisses in eine Mehrzahl an Versatzfeldern, wobei eine Menge der Mehrzahl an Feldern einer Anzahl an separaten Datenspeichern, in denen Teile der gesicherten Daten gespeichert sind, entspricht;
Zugreifen auf Stellen in den separaten Datenspeichern unter Verwendung der Versatzfelder als Indizes in den Datenspeichern, wodurch Teile der gesicherten Daten von den Stellen abgerufen werden; und
Kombinieren der Teile der sicheren Daten, um die gesicherten Daten zu erzeugen.

**EP 1 550 256 B1**

22. Computer-Programm-Produkt gemäß Anspruch 21, wobei die Program-Befehle zum Kombinieren die Datenwert-Teile mittels Multiplizierens der Datenwert-Teile mit Potenzen einer vorbestimmten numerischen Basis entsprechend einer Position eines jeden Datenwert-Teils in dem Datenwert kombinieren.

23. Computer-Programm-Produkt gemäß Anspruch 21, wobei die Programm-Befehle zum Kombinieren aufweisen Programm-Befehle zum:

Teilen eines Feldes des gehashten Ergebnisses durch eine vorbestimmte abstreifende Kombinationszahl, um einen abstreifenden Teilungsrest zu erzeugen;
Auswählen einer abstreifenden Ordnung aus einer abstreifenden Ordnungstabelle in Übereinstimmung mit dem Teilungsrest; und
Aufzeichnen der Teile der gesicherten Daten gemäß der erhaltenen abstreifenden Ordnung,
wobei das Kombinieren in Übereinstimmung mit der abstreifenden Ordnung durchgeführt wird.

24. Computer-Programm-Produkt gemäß Anspruch 19, wobei die Programm-Befehle zum Hashen einen SHA-1-Algorithmus implementieren.

25. Computer-Programm-Produkt gemäß Anspruch 19, wobei die Nachschlagtabelle (22A) mit einem ersten Typ der Zugangsinformation verknüpft ist und wobei die Programm-Befehle außerdem aufweisen Programm-Befehle zum, in Antwort auf das Ermitteln, dass das gehashte Ergebnis in der Nachschlagtabelle (22A) nicht vorhanden ist, Ermitteln, ob das gehashte Ergebnis in einer zweiten Nachschlagtabelle (22A) entsprechend einem zweiten Typ an Zugangsinformation vorhanden ist oder nicht.

26. Computer-Programm-Produkt gemäß Anspruch 19, wobei der Typ-unabhängige Teil der Zugangsinformation eine alte Zustelladresse einer Entität ist, wobei der Typ-abhängige Teil der Zugangsinformation ein Name einer Entität ist und wobei die gesicherten Daten eine neue Zustelladresse der Entität sind.

27. Computer-Programm-Produkt gemäß Anspruch 26, wobei die Nachschlagtabelle (22A) Einträge entsprechend Geschäftsunternehmen enthält und wobei die Programm-Befehle außerdem aufweisen Programm-Befehle zum, in Antwort auf das Ermitteln, dass das gehashte Ergebnis in der Nachschlagtabelle (22A) nicht vorhanden ist, Behandeln der Zugangsinformation als einen Namen und eine alte Adresse einer oder mehrerer individueller Personen.

**Revendications**

1. Procédé destiné à extraire des données sécurisées à partir d'un magasin de données sécurisées, comprenant :

la réception (41) d'informations d'accès ;
le hachage (43) d'une partie indépendante du type desdites informations d'accès reçues afin de produire un résultat haché ;
la détermination (44) du fait que ledit résultat haché est présent ou non dans une table de consultation (22A) ; et
en réponse à la détermination que ledit résultat haché est présent dans ladite table de consultation (22A), l'extraction (48) desdites données sécurisées dudit magasin de données sécurisées en utilisant un algorithme d'extraction sécurisé associé audit magasin de données sécurisées ;
le procédé étant **caractérisé par** :

en réponse à la détermination que ledit résultat haché n'est pas présent dans ladite table de consultation (22A), la permutation (52) desdites informations d'accès afin d'obtenir des informations d'accès permutées ;
dans lequel lesdites étapes de hachage, détermination et extraction sont mises en oeuvre en conformité avec lesdites informations d'accès permutées.

2. Procédé selon la revendication 1, dans lequel ladite extraction comprend :

la normalisation (45) d'une partie dépendante du type desdites informations d'accès reçues ;
la combinaison de ladite partie dépendante du type normalisée desdites informations d'accès reçues à ladite partie indépendante du type desdites informations d'accès reçues ;
le hachage (46) d'un résultat de ladite combinaison afin d'obtenir un résultat haché combiné ; et
l'accès audit magasin de données sécurisées avec ledit résultat haché combiné.

13

**3.** Procédé selon la revendication 2, dans lequel ledit accès comprend :

la segmentation dudit résultat haché combiné en une pluralité de champs de décalage, une quantité de ladite pluralité de champs correspondant à un nombre de magasins de données individuels dans lesquels des parties desdites données sécurisées sont stockées ; l'accès à des emplacements dans lesdits magasins de données individuels en utilisant lesdits champs de décalage en qualité d'indices dans lesdits magasins de données, moyennant quoi des parties desdites données sécurisées sont extraites desdits emplacements ; et la combinaison desdites parties desdites données sécurisées afin de produire lesdites données sécurisées.

**4.** Procédé selon la revendication 3, dans lequel ladite combinaison combine lesdites parties de valeur de données en multipliant lesdites parties de valeur de données par des puissances d'une base numérique prédéterminée correspondant à une position de chaque partie de valeur de données dans ladite valeur de données.

**5.** Procédé selon la revendication 3, dans lequel ladite combinaison comprend :

la division d'un champ dudit résultat haché par un nombre de combinaisons de segmentations prédéterminé afin de produire un module de segmentation ; la sélection d'un ordre de segmentation à partir d'une table d'ordres de segmentation en conformité avec ledit module ; et la réorganisation desdites parties desdites données sécurisées selon ledit ordre de segmentation extrait ; moyennant quoi ladite combinaison est mise en oeuvre en conformité avec ledit ordre de segmentation.

**6.** Procédé selon la revendication 1, dans lequel ledit hachage est mis en oeuvre selon un algorithme SHA-1.

**7.** Procédé selon la revendication 1, dans lequel ladite table de consultation (22A) est associée à un premier type desdites informations d'accès, et dans lequel ledit procédé comprend en outre, en réponse à la détermination que ledit résultat haché n'est pas présent dans ladite table de consultation (22A), la détermination du fait que ledit résultat haché est présent ou non dans une seconde table de consultation (22A) correspondant à un second type desdites informations d'accès.

**8.** Procédé selon la revendication 1, dans lequel ladite partie indépendante du type desdites informations d'accès représente une ancienne adresse postale d'une entité, dans lequel ladite partie dépendante du type desdites informations d'accès représente un nom d'une entité, et dans lequel lesdites données sécurisées représentent une nouvelle adresse postale de ladite entité.

**9.** Procédé selon la revendication 8, dans lequel ladite table de consultation (22A) contient des entrées correspondant à des entités commerciales, et dans lequel ledit procédé comprend en outre, en réponse à la détermination que ledit résultat haché n'est pas présent dans ladite table de consultation (22A), le traitement des informations d'accès en tant qu'un nom et une ancienne adresse d'un ou plusieurs individus.

**10.** Système informatique (14) comprenant un processeur (18) destiné à exécuter des instructions de programme, et une mémoire (19) couplée audit processeur (18) afin de stocker des données et des instructions de programme, dans lequel lesdites instructions de programme comprennent des instructions de programme pour :

recevoir des informations d'accès ; hacher une partie indépendante du type desdites informations d'accès reçues afin de produire un résultat haché ; déterminer si ledit résultat haché est présent ou non dans une table de consultation (22A) ; et en réponse à la détermination que ledit résultat haché est présent dans ladite table de consultation (22A), extraire lesdites données sécurisées dudit magasin de données sécurisées en utilisant un algorithme d'extraction sécurisé associé audit magasin de données sécurisées ; lesdites instructions de programme étant **caractérisées en ce que** :

elles comportent en outre des instructions de programme pour, en réponse à la détermination que ledit résultat haché n'est pas présent dans ladite table de consultation (22A), permuter lesdites informations d'accès afin d'obtenir des informations d'accès permutées ; dans lequel lesdites instructions de programme destinées au hachage, à la détermination et à l'extraction sont de nouveau mises en oeuvre en utilisant lesdites informations d'accès permutées en tant qu'entrées.

11. Système informatique (14) selon la revendication 10, dans lequel lesdites instructions de programme destinées à l'extraction comprennent des instructions de programme pour :

normaliser une partie dépendante du type desdites informations d'accès reçues ;
combiner ladite partie dépendante du type normalisée desdites informations d'accès reçues à ladite partie indépendante du type desdites informations d'accès reçues ;
hacher un résultat de ladite combinaison afin d'obtenir un résultat haché combiné ; et
accéder audit magasin de données sécurisées avec ledit résultat haché combiné.

12. Système informatique (14) selon la revendication 11, dans lequel lesdites instructions de programme destinées à l'accès comprennent des instructions de programme pour :

segmenter ledit résultat haché combiné en une pluralité de champs de décalage, une quantité de ladite pluralité de champs correspondant à un nombre de magasins de données individuels dans lesquels des parties desdites données sécurisées sont stockées ;
accéder à des emplacements dans lesdits magasins de données individuels en utilisant lesdits champs de décalage en qualité d'indices dans lesdits magasins de données,
moyennant quoi des parties desdites données sécurisées sont extraites desdits emplacements ; et
combiner lesdites parties desdites données sécurisées afin de produire lesdites données sécurisées.

13. Système informatique (14) selon la revendication 12, dans lequel lesdites instructions de programme destinées à la combinaison combinent lesdites parties de valeur de données en multipliant lesdites parties de valeur de données par des puissances d'une base numérique prédéterminée correspondant à une position de chaque partie de valeur de données dans ladite valeur de données.

14. Système informatique (14) selon la revendication 12, dans lequel lesdites instructions de programme destinées à la combinaison comprennent des instructions de programme pour :

diviser un champ dudit résultat haché par un nombre de combinaisons de segmentations prédéterminé afin de produire un module de segmentation ;
sélectionner un ordre de segmentation à partir d'une table d'ordres de segmentation en conformité avec ledit module ; et
réorganiser lesdites parties desdites données sécurisées selon ledit ordre de segmentation extrait ;
moyennant quoi ladite combinaison est mise en oeuvre en conformité avec ledit ordre de segmentation.

15. Système informatique (14) selon la revendication 10, dans lequel lesdites instructions de programme destinées au hachage mettent en oeuvre un algorithme SHA-1.

16. Système informatique (14) selon la revendication 10, dans lequel ladite table de consultation (22A) est associée à un premier type desdites informations d'accès, et dans lequel lesdites instructions de programme comprennent en outre des instructions de programme pour, en réponse à la détermination que ledit résultat haché n'est pas présent dans ladite table de consultation (22A), déterminer si ledit résultat haché est présent ou non dans une seconde table de consultation (22A) correspondant à un second type desdites informations d'accès.

17. Système informatique (14) selon la revendication 10, dans lequel ladite partie indépendante du type desdites informations d'accès représente une ancienne adresse postale d'une entité, dans lequel ladite partie dépendante du type desdites informations d'accès représente un nom d'une entité, et dans lequel lesdites données sécurisées représentent une nouvelle adresse postale de ladite entité.

18. Système informatique (14) selon la revendication 17, dans lequel ladite table de consultation (22A) contient des entrées correspondant à des entités commerciales, et dans lequel lesdites instructions de programme comprennent en outre des instructions de programme pour, en réponse à la détermination que ledit résultat haché n'est pas présent dans ladite table de consultation (22A), traiter les informations d'accès en tant qu'un nom et une ancienne adresse d'un ou plusieurs individus.

19. Produit-programme informatique comprenant un support de transport de signaux codant des instructions de programme en vue d'une exécution au sein d'un système informatique à usage général (14), dans lequel lesdites instructions de programme comprennent des instructions de programme pour :

recevoir des informations d'accès ;
hacher une partie indépendante du type desdites informations d'accès reçues afin de produire un résultat haché ;
déterminer si ledit résultat haché est présent ou non dans une table de consultation (22A) ; et
en réponse à la détermination que ledit résultat haché est présent dans ladite table de consultation (22A), extraire lesdites données sécurisées dudit magasin de données sécurisées en utilisant un algorithme d'extraction sécurisé associé audit magasin de données sécurisées ;
lesdites instructions de programme étant **caractérisées par** des instructions de programme pour :

en réponse à la détermination que ledit résultat haché n'est pas présent dans ladite table de consultation, permuter lesdites informations d'accès afin d'obtenir des informations d'accès permutées ;
dans lequel lesdites instructions de programme destinées au hachage, à la détermination et à l'extraction sont de nouveau mises en oeuvre en utilisant lesdites informations d'accès permutées en tant qu'entrées.

**20.** Produit-programme informatique selon la revendication 19, dans lequel lesdites instructions de programme destinées à l'extraction comprennent des instructions de programme pour :

normaliser une partie dépendante du type desdites informations d'accès reçues ;
combiner ladite partie dépendante du type normalisée desdites informations d'accès reçues à ladite partie indépendante du type desdites informations d'accès reçues ;
hacher un résultat de ladite combinaison afin d'obtenir un résultat haché combiné ; et
accéder audit magasin de données sécurisées avec ledit résultat haché combiné.

**21.** Produit-programme informatique selon la revendication 20, dans lequel lesdites instructions de programme destinées à l'accès comprennent des instructions de programme pour :

segmenter ledit résultat haché combiné en une pluralité de champs de décalage, une quantité de ladite pluralité de champs correspondant à un nombre de magasins de données individuels dans lesquels des parties desdites données sécurisées sont stockées ;
accéder à des emplacements dans lesdits magasins de données individuels en utilisant lesdits champs de décalage en qualité d'indices dans lesdits magasins de données,
moyennant quoi des parties desdites données sécurisées sont extraites desdits emplacements ; et
combiner lesdites parties desdites données sécurisées afin de produire lesdites données sécurisées.

**22.** Produit-programme informatique selon la revendication 21, dans lequel lesdites instructions de programme destinées à la combinaison combinent lesdites parties de valeur de données en multipliant lesdites parties de valeur de données par des puissances d'une base numérique prédéterminée correspondant à une position de chaque partie de valeur de données dans ladite valeur de données.

**23.** Produit-programme informatique selon la revendication 21, dans lequel lesdites instructions de programme destinées à la combinaison comprennent des instructions de programme pour :

diviser un champ dudit résultat haché par un nombre de combinaisons de segmentations prédéterminé afin de produire un module de segmentation ;
sélectionner un ordre de segmentation à partir d'une table d'ordres de segmentation en conformité avec ledit module ; et
réorganiser lesdites parties desdites données sécurisées selon ledit ordre de segmentation extrait ;
moyennant quoi ladite combinaison est mise en oeuvre en conformité avec ledit ordre de segmentation.

**24.** Produit-programme informatique selon la revendication 19, dans lequel lesdites instructions de programme destinées au hachage mettent en oeuvre un algorithme SHA-1.

**25.** Produit-programme informatique selon la revendication 19, dans lequel ladite table de consultation (22A) est associée à un premier type desdites informations d'accès, et dans lequel lesdites instructions de programme comprennent en outre des instructions de programme pour, en réponse à la détermination que ledit résultat haché n'est pas présent dans ladite table de consultation (22A), déterminer si ledit résultat haché est présent ou non dans une seconde table de consultation (22A) correspondant à un second type desdites informations d'accès.

26. Produit-programme informatique selon la revendication 19, dans lequel ladite partie indépendante du type desdites informations d'accès représente une ancienne adresse postale d'une entité, dans lequel ladite partie dépendante du type desdites informations d'accès représente un nom d'une entité, et dans lequel lesdites données sécurisées représentent une nouvelle adresse postale de ladite entité.

27. Produit-programme informatique selon la revendication 26, dans lequel ladite table de consultation (22A) contient des entrées correspondant à des entités commerciales, et dans lequel lesdites instructions de programme comprennent en outre des instructions de programme pour, en réponse à la détermination que ledit résultat haché n'est pas présent dans ladite table de consultation (22A), traiter les informations d'accès en tant qu'un nom et une ancienne adresse d'un ou plusieurs individus.

10

Database Server

12

11

Storage Media
13B

Workstation Computer
14

Storage Media
13A

Memory 19

CPU 18

Graphical Display
16

15

17

Fig. 1

18

**30**

Name and Old Address

Type-independent access information standardization (EMDP Generator) **20**

EMDP

Type 1 Table (Business)

SHA Generator **21A**

**22A**

Business Name Standardizer **24A**

Individual Name Parser **24B**

SHA Generator **21B**

Data Storage **29**

**27** Move Table

Secure data store retrieval algorithm **28**

New Address

# Fig. 2

**Fig. 3**

```
                    ┌─────────────┐
                    │   Start     │
                    └──────┬──────┘
                           │
                           ▼
              ┌──────────────────────────┐
              │ Receive authorizing      │
              │ information. 41          │
              └────────────┬─────────────┘
                           │
                           ▼
              ┌──────────────────────────┐
              │ Generate standard access │
              │ information from non-type│
              │ dependent part of received│
              │ information.    42       │
              └────────────┬─────────────┘
                           │
                           ▼
              ┌──────────────────────────┐
              │ Hash standardized access │
              │ information. 43          │
              └────────────┬─────────────┘
```

Entry in look-up table corresponding to hashed access information? **44**

Y → Standardize type-dependent part of access information according to type associated with lookup table **45**

Go to next look-up table for next access information type. **49**

Hash standardized access information from steps 43 and 49. **46**

Last table? **50**

N

Input permutation to try? **51**

N

Entry in table for data store? **47**

Y

Retrieve data from secured data store using hashed standardized access information **48**

Permute type-dependent part of access information. **52**

Y

```
                    ┌─────────────┐
                    │    End      │
                    └─────────────┘
```

**Start**

Receive name and old address.
**61**

Generate EMDP for old address. **62**

Hash EMDP
**63**

Entry in business table corresponding to hashed EMDP?
**64**

Y → Standardize business name **65**

N

Parse name as individual's name and standardize **69**

Hash type-standardized name and EMDP **66**

Entry in move look-up table? **67**

N

Input permutation to try? **70**

N

Y

Permute access information. **71**

Y

Retrieve new address from secured data store using hashed standardized access information **68**

**End**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030182568 A1
- US 20040007616 A1
- US 20030182018 A1
- US 20040128274 A1
- DE 4421640 C1
- EP 0381418 A2
- US 5893120 A

**Non-patent literature cited in the description**

- SECURE HASH STANDARD. Federal Information Processing Standards Publication 180-1. National Institute of Standards and Technology